(19) Europäisches Patentamt
European Patent Office
Office européen des brevets

(11) Publication number: 0 131 664
A1

# (12) EUROPEAN PATENT APPLICATION

(21) Application number: 83304111.4

(22) Date of filing: 15.07.83

(51) Int. Cl.⁴: B 66 C 23/72
B 66 C 23/06, B 65 G 67/60

(43) Date of publication of application:
23.01.85 Bulletin 85/4

(84) Designated Contracting States:
AT BE CH DE FR IT LI LU NL SE

(71) Applicant: SIMON-CARVES LIMITED
Regal House Duke Street
Stockport Cheshire SK1 3AA(GB)

(71) Applicant: Moledeth Know-How Export Company (1978) Limited
P.O. Box 407
Haifa 31003(IL)

(72) Inventor: Gold, Raymond David
31 Freshfields Drive
Padgate Warrington Cheshire(GB)

(72) Inventor: Beresinsky, Isaac
P.O. Box 407
Haifa 31003(IL)

(74) Representative: Lawrence, John Gordon et al,
McNeight & Lawrence Regent House Heaton Lane
Stockport, Cheshire SK4 1BS(GB)

## (54) Boom structure.

(57) A boom (11) which is pivotally mounted for swinging movement about a horizontal axis (X) has a pivotally connected depending leg (15) at one end. The boom is constructed in the form of a parallelogram linkage having a counterbalance weight (16) on the side of the axis opposite the leg such that changes in balance from swinging of the leg in the plane of the boom are compensated by corresponding swinging movements of the counterbalance weight.

EP 0 131 664 A1

Croydon Printing Company Ltd

BOOM STRUCTURE

This invention concerns a boom structure of the kind (hereinafter termed "of the kind referred to") comprising a boom member which is pivoted at a position partway along its length for swinging movement about a horizontal axis and which pivotally supports a depending leg on one side of said horizontal axis for swinging movement in a plane perpendicular to said axis.

Boom structures of the kind referred to are frequently used in quayside equipment for unloading bulk materials, such as grain, from the hold of a cargo ship. In such applications the depending leg is comprised by an elevating device for lifting the grain or other material, for example in the form of a pneumatic suction duct, a mechanical bucket or drag chain elevator, or a pair of opposed endless belts sealed at their edges and urged together by air pressure and adapted to entrain and convey material therebetween as fully described in British Patent No. 1,319,738. In use the boom member may be swung about said horizontal axis and the depending leg swung about a horizontal axis relative to the boom member to enable the lower inlet end of the leg to be introduced through the restricted hatch of a cargo hold and located at desired positions within the hold, to enable material to be picked up from various positions within the hold.

Customarily, the boom member carries a counterbalance weight on the opposite side of said horizontal axis from said leg. Such counterbalance weight, whilst effective in balancing the boom member with the leg hanging vertically (though it may be desirable for the leg to be downwardly biased) does nothing to compensate for swinging movements of the leg in the plane of the boom member. In consequence, quite substantial forces may be required both to move and hold the boom member and leg in desired positions.

It is an object of the present invention to provide a boom structure of the kind referred to which substantially overcomes the disadvantage and problem aforesaid.

According to a preferred embodiment of the present invention, there is provided a boom structure of the kind referred to characterised in that said boom member is formed by the upper and lower beams of a hinged parallelogram linkage which on one side of said axis supports said leg and which at the opposite side carries a counterbalance weight pivotally connected between the upper and lower beams and having its centre of gravity at such position that inward and outward swinging movements of the leg operate through the parallelogram linkage to cause corresponding movements of the counterbalance weight which compensate for the swinging movements of the leg thus to maintain the desired balance of the boom structure about said horizontal axis.

The invention will be further apparent from the following description, with reference to the several figures of the accompanying drawings, which show, by way of example, two forms of boom structure embodying the invention.

Of the drawings:-

Figure 1 shows a diagrammatic side elevation of a first form of boom structure embodying the invention;

Figure 2 shows a side elevation of a grain elevator incorporating the boom structure of Figure 1.

and Figure 3 shows a diagrammatic side elevation of a second form of boom structure embodying the invention.

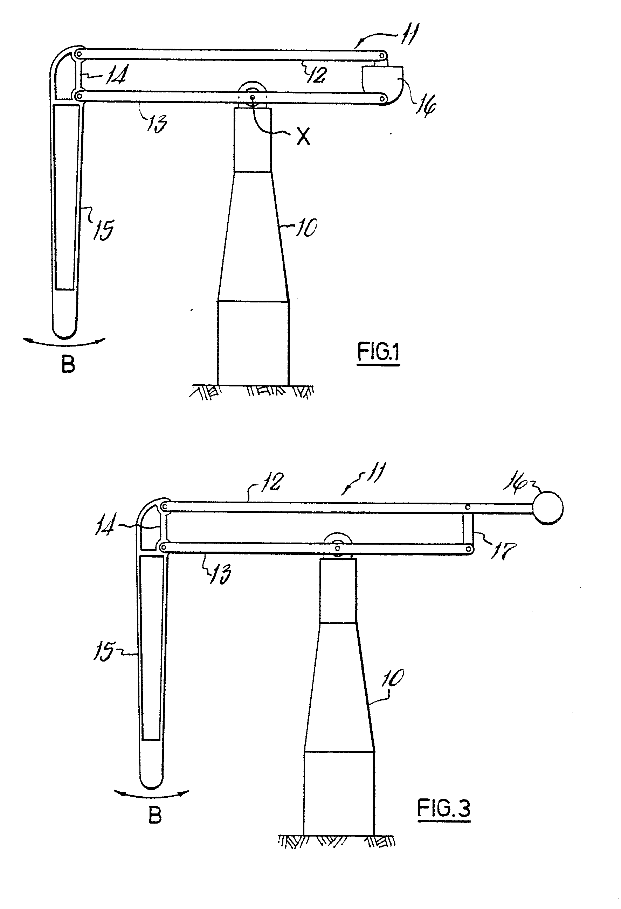

Referring now to Figure 1, it will be seen that the structure comprises a vertical support 10 which pivotally mounts a boom member generally indicated at 11 for swinging movements about a horizontal axis X. The boom member 11 comprises the upper and lower beams 12 and 13 respectively of a hinged parallelogram linkage which is completed by an endwise support 14 (pivotally connected by its upper and lower ends to the beams 12 and 13 respectively) for a depending leg 15, and, at the opposite end by a counterbalance weight 16 (pivotally connected by its upper and lower ends to the beams 12 and 13 respectively). The axis X is fixed relative to the lower beam 13.

The mass of the counterbalance weight 16 is selected so that the boom structure as a whole is in substantial balance about the axis X regardless of the angle of inclination of the boom member 11 provided the leg 15 depends vertically. The leg 15 may be biassed downwardly if desired by reducing the mass of the counterbalance weight from that required for full balance. It will be understood that when the leg 15 is vertically disposed the counterbalance weight 16 is also vertically disposed so that its centre of gravity is substantially above the pivotal connection between the counterbalance weight 16 and lower beam 13 which of course support the counterbalance weight 16.

Swinging of the leg 15 in the plane of the boom member 11 as shown by the arrows B is necessarily accompanied by longitudinal movement of the upper beams 12 relative to the lower beam 13 to cause corresponding swinging of the counterbalance weight 16 about its pivotal connection with the lower beam 13.

By proper adjustment of the height of the centre of gravity of the counterbalance weight 16 above the pivotal connection between the counterbalance weight 16 and lower beam 13, swinging movements of the leg 15 cause displacement of the centre of gravity of the counterbalance weight 16 to one or other side of the pivotal connection between the counterbalance weight 16 and lower beam 13 by an extent to compensate and maintain balance. The desired location of the centre of gravity can be calculated and adjustment of the height of the centre of gravity may be achieved by assembling the counterbalance weight from superimposed plates of varying size or by providing means such as a screw to raise and lower a weight between the upper and lower beams. Any such arrangement may be incorporated within a casing pivotally connected between the beams to present a neat appearance and provide protection from the weather.

In a modification to the arrangement the support 14 may be constituted by an upper portion of the length of the leg 15 itself.

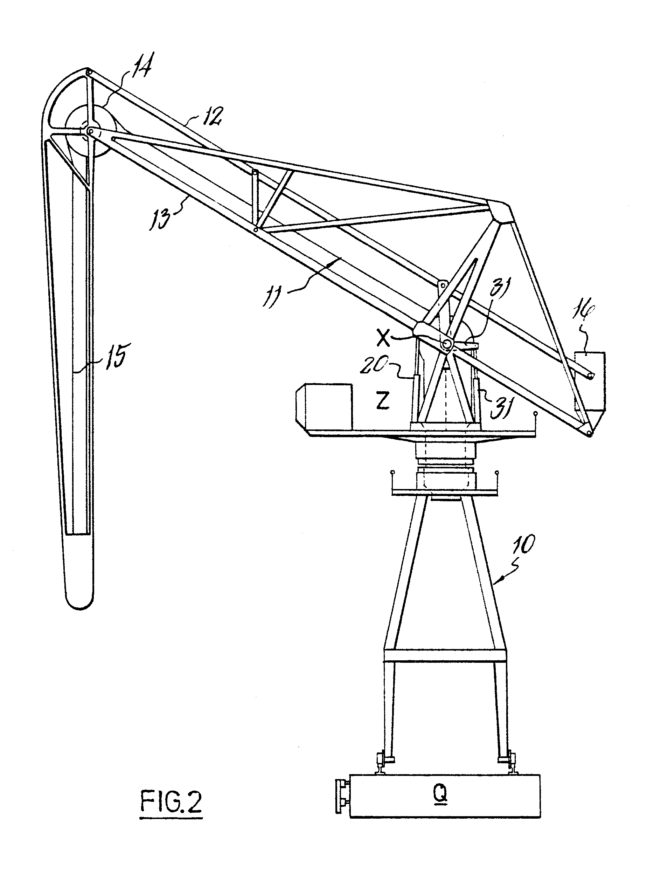

Referring now to Figure 2, it will be seen that the grain elevator has a boom structure generally as shown in Figure 1, like parts again being indicated with like reference numerals.

The vertical support 10 is in the form of a tower which runs on rails on the quayside Q and whose upper part (which supports the boom member 11) is rotatable about the vertical axis Z to permit slewing movements of the boom member 11.

The leg 15 and that part of the beam 13 extending between the leg 15 and axis X support grain elevating and conveying means comprised by a pair of opposed endless bands, sealed at their edges and urged together by air pressure and adapted to entrain and convey grain therebetween all as described in detail in British patent Specification No. 1,318,738. The grain elevating and conveying means releases the grain at the centre of the support 10 for transfer by conventional conveying means to the storage silos or the like.

The beam 13 can be pivotted about the axis X by means of a pair of hydraulic cylinders 20 pivotally connected between a frame member of the support 10 and a point on the lower beam 13 offset from the axis X.

The leg 15 can be swung inwardly and outwardly relative to the quayside and in the plane of the boom member 11 by means of a pair of double-acting hydraulic cylinders 30 pivotally connected between a frame member of the support 10 and the end of one arm of a bell-crank lever 31 pivotally mounted on the axis X and having the end of its other arm pivotally connected to the beam 12 such that this arm extends parallel with the support 14 and axis of the counterbalance weight 16.

Operation of the cylinder 30 causes the parallelogram linkage to move to cause swinging movement of the leg 15 and compensatory swinging movement of the counterbalance weight 16.

It will be appreciated that it is not intended to limit the invention to the above example only, many variations, such as might readily occur to one skilled in the art, being possible, without departing from the scope thereof as defined by the appended claims.

Thus, for example, the counterbalance weight 16 (and its pivotal connections) may be movable along the length of the beams 12 and 13 automatically to achieve a finer degree of compensatory balance (depending, for example, upon the weight of bulk material within the leg and boom).

Again, for example, two counterbalance weights may be provided, one of which can be fixed to the lower beam of the parallelogram linkage and the other, now of lesser weight, connected between the upper and lower beams as and for the purposes described.

Yet again, and as shown in Figure 3 wherein like parts are indicated by like reference numerals, it will be seem that the counterbalance weight 16 no longer forms part of the parallelogram linkage and is instead mounted on an extension of the beam 12 beyond the upper end of a link 17 which completes the parallologram linkage in place of the counterbalance weight. The system operates as previously described, the lengths of the links 14 and 17 being such as to position the centre of gravity of the counterbalance weight at the optimum position.

CLAIMS

1. A boom structure of the kind referred to characterised in that said boom member is formed by the upper and lower beams of a hinged parallelogram linkage which on one side of said axis supports said leg and which at the opposite side carries a counterbalance weight, the arrangement being such that inward and outward swinging movements of the leg operate through the parallelogram linkage to cause corresponding movements of the counterbalance weight to compensate for the swinging movements of the leg.

2. A boom structure according to claim 1 wherein said counterbalance weight is secured to the upper beam of the parallelogram linkage.

3. A boom structure according to claim 2 wherein the upper beam is extended outwardly beyond the parallelogram linkage to support said counterbalance weight.

4. A boom structure of the kind referred to characterised in that said boom member is formed by the upper and lower beams of a hinged parallelogram linkage which on one side of said axis supports said leg and which at the opposite side carries a counterbalance weight pivotally connected between the upper and lower beams and having its centre of gravity at such position that inward and outward swinging movements of the leg operate through the parallelogram linkage to cause corresponding movements of the counterbalance weight which compensate for the swinging movements of the leg, thus to maintain the desired balance of the boom structure about said horizontal axis.

5. A boom structure according to claim 4 wherein said counterbalance weight is of such mass that it substantially balances the boom structure about said horizontal axis for all inclinations of the boom member.

6. A boom structure according to claim 4 including a further fixed counterbalance weight, the two counterbalance weights together being of such mass that they substantially balance the boom structure about said horizontal axis for all inclinations of the boom member.

7. A boom structure according to any one of claims 4 to 6 wherein an upper portion of the length of the leg forms a link in the parallelogram linkage.

8. A boom structure according to any one of claims 4 to 6 wherein the leg is rigidly secured to a support which forms a link in the parallelogram linkage.

9. A boom structure according to any preceding claim wherein said leg comprises an elevator for bulk material such as grain.

11
12
14
16
13
X
15
10
B

FIG.1

12
11
16
14
17
13
15
10
B

FIG.3

14
12
13
11
31
16
X
20
Z
31
15
10
Q

FIG.2

European Patent Office

# EUROPEAN SEARCH REPORT

0131664

Application number

EP 83 30 4111

## DOCUMENTS CONSIDERED TO BE RELEVANT

| Category | Citation of document with indication where appropriate, of relevant passages | Relevant to claim | CLASSIFICATION OF THE APPLICATION (Int Cl. 3) |
|---|---|---|---|
| X,A | EP-A-0 033 060 (S.A. SOBEMAI) * Figure * --- | 1,7 | B 66 C 23/72<br>B 66 C 23/06<br>B 65 G 67/60 |
| X,A | DE-B-1 581 093 (MANNESMANN AG) * Claim 1; column 2, line 61 - column 3, line 12; figure 1 * --- | 1-3,8 | |
| X,A | DE-A-1 756 686 (CAREGNATO) * Claims 1-3; figures 1, 2 * --- | 1,4,5, 9 | |
| A | GB-A- 918 575 (SHELL INTERNATIONALE RESEARCH MAATSCHAPPIJ N.V.) * Page 1, line 84 - page 2, line 38; figure 1 * --- | 6 | **TECHNICAL FIELDS SEARCHED (Int. Cl. 3)** |
| A | DD-A- 86 071 (PAETZEL) --- | | |
| A | US-A-3 134 340 (OLSEN et al.) --- | | B 65 G 67/00<br>B 66 C 23/00 |
| A | DE-B-1 052 089 (MANNHEIMER MASCHINENFABRIK MOHR & FEDERHAFF AG) --- | | |
| D,A | GB-A-1 319 738 (MOLEDETH DEVELOPMENT CO. LTD.) ----- | | |

The present search report has been drawn up for all claims

| Place of search | Date of completion of the search | Examiner |
|---|---|---|
| BERLIN | 27-02-1984 | KANAL P K |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82